# EUROPÄISCHE PATENTANMELDUNG

(11) **EP 3 051 781 A1**
(43) Veröffentlichungstag der Anmeldung: **03.08.2016**
(21) Anmeldenummer: 16152452.5
(22) Anmeldetag: 22.01.2016
(51) Int. Cl.: H04M 1/04, H01R 13/00, H02J 7/00

(54) **HALTEVORRICHTUNG**

(30) Priorität: 29.01.2015 DE 102015101347
(71) Anmelder: "Durable" Hunke & Jochheim GmbH & Co. KG, 58636 Iserlohn (DE)
(72) Erfinder: Maier-Hunke, Horst-Werner, 58640 Iserlohn (DE)
(74) Vertreter: Beckord & Niedlich

(57) **Zusammenfassung**

Die vorliegende Erfindung offenbart eine Haltevorrichtung (1-1; 1-2; 1-3), welche eine Ablagefläche bereitstellen kann, zur Befestigung in einer Steckdose durch einen Stecker. Dabei weist die Haltevorrichtung (1-1; 1-2; 1-3) ein Befestigungselement (3-1; 3-2; 3-3) auf, welches die Haltevorrichtung (1-1; 1-2; 1-3) an der Steckdose befestigen kann und welches mit der ersten Haltestruktur (2-1; 2-2; 2-3) in einer ersten Position und einer zweiten, gegenüber der ersten Position um 90° gedrehten Position koppelbar ist.

## Beschreibung

Die Erfindung betrifft eine Haltevorrichtung zur Befestigung in einer Steckdose durch einen Stecker, bei welcher ein Befestigungselement in mindestens zwei Positionen eingesetzt werden kann.

Eine Vielzahl mobiler elektronischer Geräte wird heute durch Batterien mit elektrischer Energie versorgt. Solche mobilen Geräte können z. B. Handys, Smartphones, Tablet-PCs, MP3-Player oder dergleichen sein.

Üblicherweise werden die Batterien dieser Geräte mittels eines entsprechenden Ladegeräts geladen, welches über ein Ladekabel mit dem Gerät gekoppelt wird.

Insbesondere auf Reisen, z. B. in Restaurants, Hotelzimmern, Zügen oder dergleichen sind Steckdosen oft nur an ungeeigneten Positionen vorhanden, sodass das jeweilige Gerät nicht z. B. in einem Regal abgelegt werden kann und deshalb an dem Kabel des Ladegeräts hängt oder auf dem Boden liegt.

Der Anmelderin sind sog. Handyhalter bekannt, welche eine Platte mit einer kreisförmigen Öffnung aufweisen, durch welche ein Stecker eines Ladegeräts gesteckt werden kann, um die Platte an der Steckdose zu befestigen. Diese Handyhalter können folglich mit senkrecht oder waagrecht stehenden Steckdosen eingesetzt werden. Ferner weisen diese Handyhalter eine Ablage auf, die in einem 90°-Winkel mit der Platte gekoppelt ist. Nachteilig ist bei diesen Handyhaltern, dass sich die Platte mit der Öffnung um den Stecker drehen kann. Folglich ist die Ablage, auf welche das Handy zum Laden gelegt wird, nicht fest. Stößt man gegen die Ablage, kann das Handy leicht herunterfallen.

In der GB 2 364 832 A werden verschiedene Halter für elektrische Kleingeräte, wie Mobil-telefone, offenbart, wobei die Halter jeweils Ausnehmungen für bestimmte Steckertypen aufweisen, die genau an diese Steckertypen angepasst sind, wobei auch genau nur eine Orientierung des Steckers möglich ist.

Die US 8,686,683 B2 offenbart dagegen einen Halter mit einer Ausnehmung, die an einen speziellen Stecker des US-Typs Nema-5 mit einem integriertem Ladegerät angepasst ist. Im Zusammenhang mit anderen Steckern kann dieser Halter nicht genutzt werden.

Die DE 20 2012 101 714 U1 zeigt schließlich eine Haltevorrichtung für elektronische Geräte, mit einem Klemmelement und einem Halteelement, wobei das Klemmelement auf das Gehäuse des Ladegeräts lösbar form- und/oder kraftschlüssig aufsteckbar ist. Das Klemmelement besteht im Wesentlichen aus einem U-förmigen Bügel und das Halteelement aus einem daran am U-Steg angeformten, fingerartigen Stützelement. Dabei sind Halteelement und Klemmelement als ein gemeinsames Teil geformt. In einer Ausführungsform soll durch Biegeelemente oder Gelenke dafür gesorgt werden, dass das Stützelement relativ zum Klemmelement positioniert werden kann, um unabhängiger davon zu werden, wie das Ladegerät mit seinem Gehäuse in die Steckdose einzuführen ist. Wie eine solche Haltevorrichtung tatsächlich ausgeführt werden kann, wird nicht angegeben.

Es ist eine Aufgabe der vorliegenden Erfindung, eine verbesserte Möglichkeit zum Ablegen eines elektronischen Geräts in der Nähe einer Steckdose, insbesondere während eines Ladevorgangs, bereitzustellen.

Diese Aufgabe wird durch eine Haltevorrichtung gemäß Patentanspruch 1 gelöst.

Erfindungsgemäß weist die Haltevorrichtung eine flächig ausgebildete erste Haltestruktur auf. "Flächig" bedeutet in diesem Zusammenhang, dass die Dicke der ersten Haltestruktur gegenüber deren Breite oder Länge annähernd vernachlässigbar ist. Beispielsweise kann die Abmessung der ersten Haltestruktur in der Breite und Höhe mehrere Zentimeter, z. B. 5cm x 10cm, betragen, während die Dicke der ersten Haltestruktur weniger als einen Zentimeter, z. B. 5mm, betragen kann. Die erfindungsgemäße Haltevorrichtung weist ferner ein Befestigungselement auf, welches ausgebildet ist, die Haltevorrichtung an der Steckdose zu befestigen, und welches mit der ersten Haltestruktur mindestens in zwei Positionen, insbesondere nahezu spielfrei, lösbar gekoppelt werden kann. Das Befestigungselement ist dabei in der ersten Position gegenüber der zweiten Position um einen im Wesentlichen rechten Winkel verdreht mit der ersten Haltestruktur gekoppelt. Der Begriff "im Wesentlichen rechter Winkel" schließt dabei auch Winkel ein, die zwischen 80° und 100°, insbesondere zwischen 85° und 95°, liegen. Das Befestigungselement und die erste Haltestruktur sind also separate Komponenten der Haltevorrichtung, die in geeigneter Weise miteinander koppelbar sind.

Die vorliegende Erfindung stellt somit eine Haltevorrichtung bereit, die flexibler mit unterschiedlichen Steckdosen eingesetzt werden kann, in welche ein Stecker waagrecht oder senkrecht eingesteckt wird. Durch die Kopplung des Befestigungselements mit der ersten Haltestruktur kann gleichzeitig aber eine ungewollte Bewegung der Haltevorrichtung unterdrückt oder idealerweise ganz verhindert werden.

Die oben bereits erwähnte nahezu spielfreie Kopplung des Befestigungselements an der ersten Haltestruktur bedeutet, dass ohne eine äußere Einwirkung keine Relativbewegung zwischen der ersten Haltestruktur und dem Befestigungselement stattfindet. Allerdings kann die Kopplung z. B. durch eine manuelle Betätigung gelöst werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können und die Merkmale verschiedener Ausführungsbeispiele zu neuen Ausführungsbeispielen kombiniert werden können.

Um eine einfache Kopplung des Befestigungselements mit der ersten Haltestruktur zu ermöglichen, kann die erste Haltestruktur eine erste Ausnehmung mit einer inneren Kontur in der Form einer äußeren Kontur des Befestigungselements aufweisen. Dies hat den Vorteil, dass die erste Ausnehmung selbst zur Aufnahme eines Steckers genutzt werden könnte, indem das Befestigungselement aus der ersten Ausnehmung der Haltestruktur gelöst wird, d.h. es gibt dann ohne zusätzlichen Aufwand bzw. ohne weitere Zusatzteile die Möglichkeit, in der Haltestruktur einen weiteren Steckertyp (dann unter Weglassen des Befestigungselements) aufzunehmen. Ferner kann das Befestigungselement mittels einer Passung, insbesondere einer Übergangspassung oder Presspassung, mit der Haltestruktur gekoppelt werden. Das Befestigungselement kann folglich in die erste Haltestruktur eingelegt werden. Dazu kann das Befestigungselement ebenfalls flächig ausgebildet sein und insbesondere die im Wesentlichen gleiche Dicke wie die erste Haltestruktur aufweisen.

Um eine einfache Rotation des Befestigungselements um 90° in die erste Position und die zweite Position zu ermöglichen, kann das Befestigungselement eine rotationssymmetrische Form, zumindest für eine Rotation um einen im Wesentlichen rechten Winkel, aufweisen. Diese Form kann z. B. eine im Wesentlichen runde oder quadratische Form sein. Dabei ist nicht ausgeschlossen, dass auf dem Umfang bzw. der Kontur der Form Ausnehmungen und Erhebungen angeordnet sind. Die runde Form hat den Vorteil, dass die erste Ausnehmung insbesondere zur Aufnahme eines runden Steckertyps, beispielsweise eines Schukosteckers, dienen kann.

Um eine unbeabsichtigte Drehung des Befestigungselements bezüglich der ersten Haltestruktur auch bei einer Belastung zu verhindern, welche die Passung überlasten würde, kann eine Verschlusseinrichtung vorgesehen sein, welche ausgebildet ist, das Befestigungselement mit der ersten Haltestruktur zu koppeln.

Insbesondere kann die Verschlusseinrichtung Ausnehmungen in der ersten Haltestruktur und entsprechende, hierzu korrespondierende Erhebungen in dem Befestigungselement aufweisen. Alternativ kann die Verschlusseinrichtung Ausnehmungen in dem Befestigungselement und entsprechende, hierzu korrespondierende Erhebungen in der ersten Haltestruktur aufweisen. Dabei greifen die Ausnehmungen und die Erhebungen der ersten Haltestruktur und des Befestigungselements in einem gekoppelten Zustand wie die Zähne eines Zahnrads ineinander, sodass eine Drehung des Befestigungselements in der ersten Haltestruktur verhindert wird. Alternativ kann die Verschlusseinrichtung ein Gewinde oder einen Bajonett-artigen Verschluss aufweisen.

In einer Ausführungsform weist das Befestigungselement eine zweite Ausnehmung in Form eines CEE7/16 Steckers auf. Dieser kann zur einfachen Befestigung der Haltevorrichtung an einer Steckdose durch die zweite Ausnehmung gesteckt werden, sodass das Befestigungselement den Stecker umschließt. Das Befestigungselement kann auch eine Ausnehmung in der Form eines beliebigen Steckers aufweisen, welcher in eingestecktem Zustand nicht komplett in einer entsprechenden Steckdose versinkt, sodass das Befestigungselement durch den Körper des Steckers gehalten werden kann. Dadurch kann die erfindungsgemäße Haltevorrichtung mit unterschiedlichen Steckern, die z. B. in unterschiedlichen Ländern genutzt werden, eingesetzt werden.

Die erfindungsgemäße Haltevorrichtung kann in einer Ausführungsform auch eine Vielzahl unterschiedlicher Befestigungselemente für unterschiedliche Steckertypen aufweisen, welche je nach Bedarf austauschbar sind.

In einer Ausführungsform weist die erste Haltestruktur zwei erste Ausnehmungen auf, die jeweils die Form des Befestigungselements aufweisen. Dabei kann die erst Ausnehmung derart angeordnet sein, dass die Haltevorrichtung durch ein in der ersten Ausnehmung eingesetztes Befestigungselement mit der Steckdose gekoppelt werden kann. Die zweite Ausnehmung kann z. B., ohne eine Funktion auszuüben, lediglich der Aufnahme eines zweiten Befestigungselements dienen, welches zur Verwendung mit einem anderen Stecker als das erste Befestigungselement ausgebildet sein kann.

In einer Ausführungsform weist die Haltevorrichtung die flächig ausgebildete erste Haltestruktur, das Befestigungselement und eine flächig ausgebildete zweite Haltestruktur auf, welche eine dritte Ausnehmung aufweist, so dass die erste Haltestruktur in die zweite Haltestruktur eingelegt werden kann. Ferner ist eine Gelenkvorrichtung vorgesehen, welche die erste Haltestruktur und die zweite Haltestruktur gelenkig miteinander koppelt. Dabei ist ein erster, nicht-ausgeklappter Zustand vorgesehen, in welchem die erste Haltestruktur und die zweite Haltestruktur in einer Ebene angeordnet sind und die erste Haltestruktur in der dritten Ausnehmung der zweiten Haltestruktur angeordnet ist. Ferner ist ein zweiter, ausgeklappter Zustand vorgesehen, in welchem die erste Haltestruktur und die zweite Haltestruktur einen vorgegebenen Winkel zueinander aufweisen. Dadurch kann in dem zweiten, z. B. nach unten, ausgeklappten Zustand eine komfortable Ablagefläche bereitgestellt werden. Die Vorteile dieser Ausführungsform ergeben sich dabei auch, ohne dass das Befestigungselement in zwei Positionen mit der ersten Haltestruktur koppelbar ist.

Besonders bevorzugt weist dabei die dritte Ausnehmung in der zweite Haltestruktur eine Innenkontur passend zu einer Außenkontur der ersten Haltestruktur auf.

Alternativ könnte aber auch die erste Haltestruktur eine dritte Ausnehmung aufweisen, in der dann im ersten, nicht-ausgeklappten Zustand die zweite Haltestruktur liegt. Auch hier kann dann besonders bevorzugt die dritte Ausnehmung in der ersten Haltestruktur eine Innenkontur passend zu einer Außenkontur der zweiten Haltestruktur aufweisen.

Die zweite Haltestruktur kann die gleiche Dicke wie die erste Haltestruktur aufweisen. Somit ist in dem ersten Zustand die gesamte Haltevorrichtung sehr flach und platzsparend. Dies ist z. B. sehr vorteilhaft, wenn diese auf Reisen im Gepäck mitgeführt wird.

Gleichzeitig kann mit Hilfe der zweiten Haltestruktur in dem vorgegebenen Winkel eine Art Ablage von der ersten Haltestruktur aus aufgeklappt werden, auf welcher z. B. ein Smartphone abgelegt werden kann.

In einer Ausführungsform kann die Gelenkvorrichtung den ersten Winkel auf einen Winkel von 70° bis 110°, insbesondere von 80° bis 100° und insbesondere von 90° beschränken. Dadurch liegt die zweite Haltestruktur im zweiten Zustand in etwa in einem im Wesentlichen rechten Winkel zu einer Wand, in welcher sich die Steckdose befindet. Dies ermöglicht eine sichere Ablage z. B. eines Handys auf der zweiten Haltestruktur.

Zur weiteren Verbesserung der Ablage kann die zweite Haltestruktur mindestens eine rutschhemmende Schicht aufweisen. So kann auch bei versehentlichem Berühren der Haltevorrichtung ein Herunterfallen eines elektronischen Geräts von der zweiten Haltestruktur vermieden werden.

Die beschriebene Haltevorrichtung wird wie erwähnt bevorzugt beim Aufladen eines elektronischen Geräts, insbesondere eines Mobilfunkgeräts, genutzt, wobei das elektronische Gerät auf der zweiten Haltestruktur abgelegt wird und ein Stecker eines Ladegeräts des elektronischen Geräts durch eine zweite Ausnehmung des Befestigungselements in eine Steckdose eingesteckt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 einen schematische Darstellung einer Ausführungsform der erfindungsgemäßen Haltevorrichtung,
Figur 2 eine schematische Darstellung einer weiteren Ausführungsform der erfindungsgemäßen Haltevorrichtung,
Figur 3 eine weitere schematische Darstellung der Ausführungsform der erfindungsgemäßen Haltevorrichtung nach Figur 2, und
Figur 4 eine schematische Darstellung einer weiteren Ausführungsform der erfindungsgemäßen Haltevorrichtung.

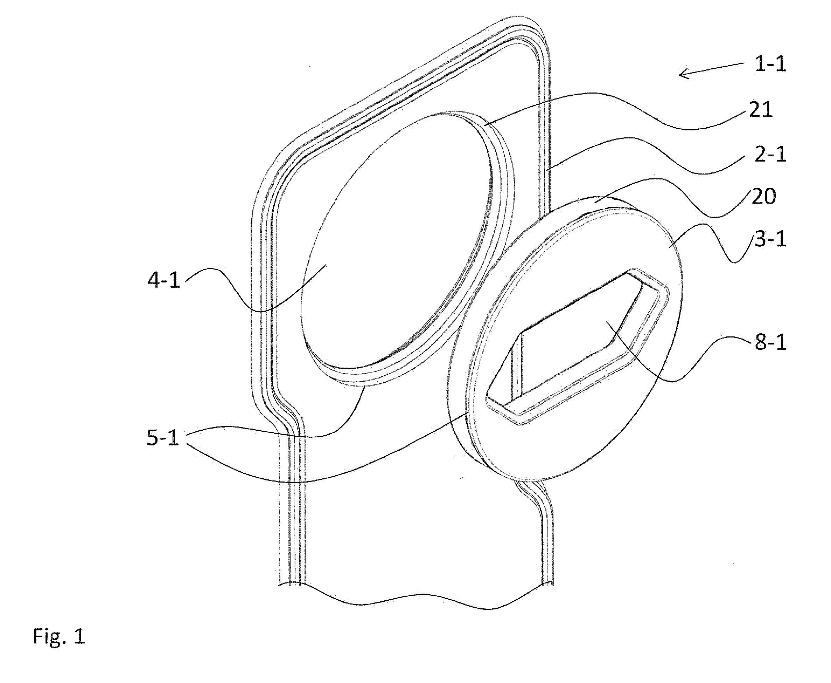

Die Haltevorrichtung 1-1 der Figur 1 zeigt die erste Haltestruktur 2-1 und das Befestigungselement 3-1 in einem nicht gekoppelten Zustand. Die erste Haltestruktur 2-1 weist eine erste Ausnehmung 4-1 auf, deren innere Kontur die Form der äußeren Kontur des Befestigungselements 3-1 hat, sodass dieses in die erste Ausnehmung 4-1 eingesetzt werden kann.

In Figur 1 sind die erste Ausnehmung 4-1 bzw. die innere Kontur der ersten Ausnehmung 4-1 und das Befestigungselement 3-1 bzw. die äußere Kontur des Befestigungselements 3-1 im Wesentlichen kreisförmig. Andere Formen der ersten Ausnehmung 4-1 und des Befestigungselements 3-1 sind ebenfalls möglich. Z. B. können die innere Kontur der ersten Ausnehmung 4-1 und die äußere Kontur des Befestigungselements 3-1 auch im Wesentlichen rechteckig ausgebildet sein. Ferner können in unterschiedlichen Ausführungen weitere geometrische Formen an der inneren Kontur der ersten Ausnehmung 4-1 und dem Umfang bzw. der äußeren Kontur des Befestigungselements 3-1 angeordnet sein. Beispielsweise können die innere Kontur der ersten Ausnehmung 4-1 und der Umfang bzw. die äußere Kontur des Befestigungselements 3-1 wellenförmig sein oder Spitzen bzw. Zacken können sich an dem Umfang des Befestigungselements 3-1 befinden, welche in entsprechende Ausschnitte in der Ausnehmung 4-1 eingreifen können.

Die Dimensionen der ersten Ausnehmung 4-1 und des Befestigungselements 3-1 können derart gewählt sein, dass das Befestigungselement 3-1 in der ersten Ausnehmung 4-1 spielfrei eingesetzt werden kann. Unter "spielfrei" oder "mittels einer Passung" ist dabei zu verstehen, dass bei einer Bewegung der ersten Haltestruktur 2-1 das Befestigungselement 3-1 der Bewegung folgt, ohne dass eine Relativbewegung zwischen der Haltestruktur 2-1 und dem Befestigungselement 3-1 stattfindet. Dies kann z. B. auch als Passung, beispielsweise als Übergangs- oder Presspassung, bezeichnet werden. Auch eine Spielpassung ist möglich. Bei den Passungen können insbesondere die ineinandergreifenden Teile gerade noch von Hand bewegt werden. Dabei ist die notwendige Einpresskraft zum Einsetzen des Befestigungselements 3-1 in die erste Ausnehmung 4-1 in einer Ausführungsform so gewählt, dass ein menschlicher Benutzer mit einem leichten Fingerdruck das Befestigungselement 3-1 in die erste Ausnehmung 4-1 einsetzen bzw. einpressen kann.

Um den Sitz des Befestigungselements 3-1 in der ersten Ausnehmung 4-1 zu verbessern und das Befestigungselement 3-1 besser gegen eine ungewollte Bewegung zu schützen, ist in Figur 1 eine Verschlusseinrichtung 5-1 an der äußeren Kontur des Befestigungselements 3-1 und an der inneren Kontur der ersten Ausnehmung 4-1 vorgesehen. Dazu ist an der äußeren Kontur des Befestigungselements 3-1 eine Stufe 20 geformt, die in eine Stufe 21 eingreift, die an der inneren Kontur der Ausnehmung 4-1 ausgebildet ist. Die Stufen 20, 21 sind dabei derart ausgebildet, dass eine weitere Bewegung des Befestigungselements 3-1 in Richtung der Steckdose in einem an einer Steckdose befestigten Zustand der Haltevorrichtung 1-1 blockiert wird, wenn die zwei Stufen 20, 21 aufeinanderliegen.

Wird das Befestigungselement 3-1 in die erste Haltestruktur 2-1 eingesetzt, kann die erste Haltestruktur 2-1 an einer Steckdose befestigt werden, indem ein Stecker durch die zweite Ausnehmung 8-1 des Befestigungselements 3-1 geführt und in die Steckdose eingesteckt wird. Die Form der zweiten Ausnehmung 8-1 der Figur 1 entspricht dabei einem sog. Eurostecker, auch CEE7/16-Stecker genannt. Alternativ kann die zweite Ausnehmung 8-1 an beliebige andere Steckerformen angepasst sein, die eine Abstützung des Befestigungselements 8-1 ermöglichen. Werden beispielsweise Stecker mit drei stiftförmigen Kontakten verwendet, kann die zweite Ausnehmung 8-1 drei Öffnungen aufweisen, durch welche diese Kontakte geführt werden können.

Die erste Haltestruktur 2-1 kann in einer Ausführungsform an deren dem Befestigungselement 3-1 entgegengesetzten Ende eine Art Ablage oder eine Art Haken aufweisen, um Objekte ablegen oder aufhängen zu können, wenn die Haltevorrichtung 1-1 in einer Steckdose befestigt ist. Auf diese Art kann an jeder beliebigen Steckdose eine Ablage bereitgestellt werden.

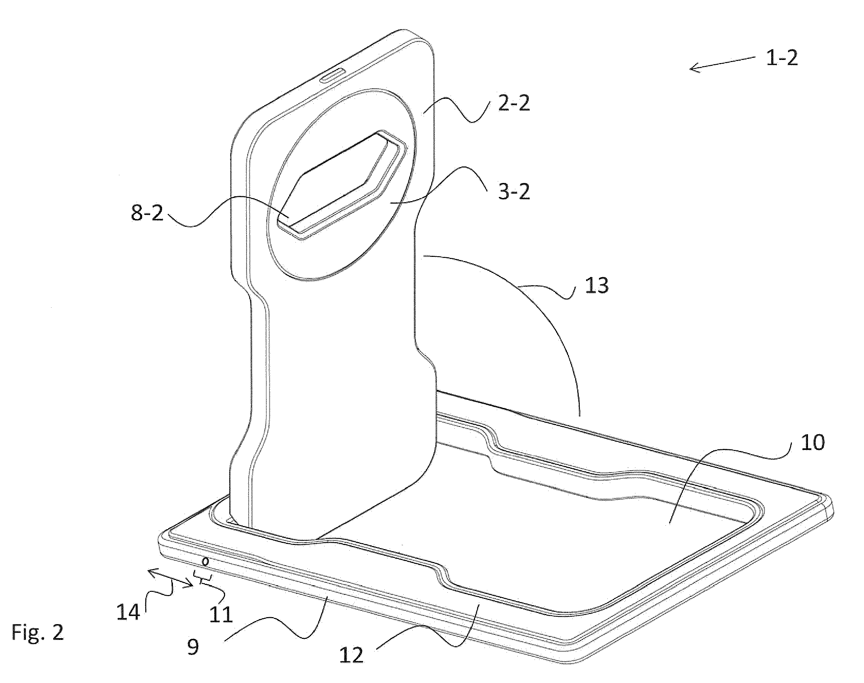

Figur 2 zeigt eine weitere Ausführungsform der erfindungsgemäßen Haltevorrichtung 1-2, in der neben der ersten Haltestruktur 2-2 mit dem eingesetzten Befestigungselement 3-2, welches die gleiche Ausnehmung 8-2 aufweist wie in Figur 1, eine zweite Haltestruktur 9 dargestellt ist.

In Figur 2 weist die erste Haltestruktur 2-2 eine längliche Form auf. Am oberen Ende der länglichen Form ist das Befestigungselement 3-2 eingesetzt, in welchem die zweite Ausnehmung 8-2 waagrecht angeordnet ist. Wird ein Eurostecker durch die zweite Ausnehmung 8-2 in eine entsprechende Steckdose gesteckt, deren Kontakte waagrecht liegen, erstreckt sich die erste Haltestruktur 2-2 von der Steckdose aus folglich nach unten. Wird das Befestigungselement 3-2 um 90° verdreht in die erste Haltestruktur 2-2 eingesetzt, gilt dies für eine Steckdose, deren Kontakte senkrecht übereinander stehen.

Am unteren Ende bzw. an dem Ende der ersten Haltestruktur 2-2, welches dem Befestigungselement 3-2 gegenüberliegt, ist eine 11 angeordnet, die die erste Haltestruktur 2-2 mit der zweiten Haltestruktur 9 koppelt. Dabei ist die 11 derart ausgebildet, dass die erste Haltestruktur 2-2 und die zweite Haltestruktur 9 in einem zweiten, ausgeklappten Zustand zueinander einen vorgegebenen Winkel 13 von ca. 90° einnehmen. Der Winkel 13 kann dabei je nach Ausführungsform auch von 90° abweichen und z. B. von 80° bis 100° oder 85° bis 95° reichen. Die Gelenkvorrichtung 11 kann z. B. Löcher aufweisen, welche an den entsprechenden Stellen der ersten Haltestruktur 2-2 und der zweiten Haltestruktur 9 angebracht werden. Ferner können Stifte vorgesehen sein, welche in die Löcher eingeführt werden, sodass die 11 gebildet wird.

In Figur 2 ist zu erkennen, dass die zweite Haltestruktur 9 eine dritte Ausnehmung 10 aufweist, deren innere Kontur die Form der äußeren Kontur der ersten Haltestruktur 2-2 aufweist. Dadurch wird es möglich, in einem ersten, nicht-ausgeklappten Zustand die erste Haltestruktur 2-2 in der zweiten Haltestruktur 9 zu versenken, sodass die erste Haltestruktur 2-2 und die zweite Haltestruktur 9 in einer Ebene liegen.

In Figur 2 ist ferner zu erkennen, dass die in einem ausgeklappten Zustand nach oben zeigende Fläche der zweiten Haltestruktur 9 mit einer rutschhemmenden Schicht 12 beschichtet ist, die z. B. aus Gummi oder dergleichen bestehen kann, um ein Verrutschen eines auf der heruntergeklappten Fläche liegende Objekts zu hemmen.

In Figur 2 ist ferner der Abstand 14 eingezeichnet, der den Abstand von dem unteren Ende der zweiten Haltestruktur 9 zu der Drehachse der Gelenkeinrichtung 11 kennzeichnet. Dieser Abstand kann z. B. derart gewählt werden, dass er der Dicke entspricht, mit wel- cher eine Norm-Steckdose aus einer Wand übersteht. Auf diese Art kann sich der Teil der zweiten Haltevorrichtung 9, welcher unter der Drehachse der 11 sitzt, an der Wand abstützen, sodass die erste Haltestruktur 2-2 in etwa parallel zur Wand liegt. Dies ermöglicht somit die exakte Ausrichtung der Haltevorrichtung 1-2. Dadurch wird es möglich, eine Ablagefläche bereitzustellen, die in einer waagrechten bzw. horizontalen Ebene liegt, wodurch ein Verrutschen oder Herunterfallen des auf der Ablagefläche unterhalb des Befestigungselements 3-2 bzw. des in der Steckdose eingesteckten Steckers liegenden Objekts verhindert wird.

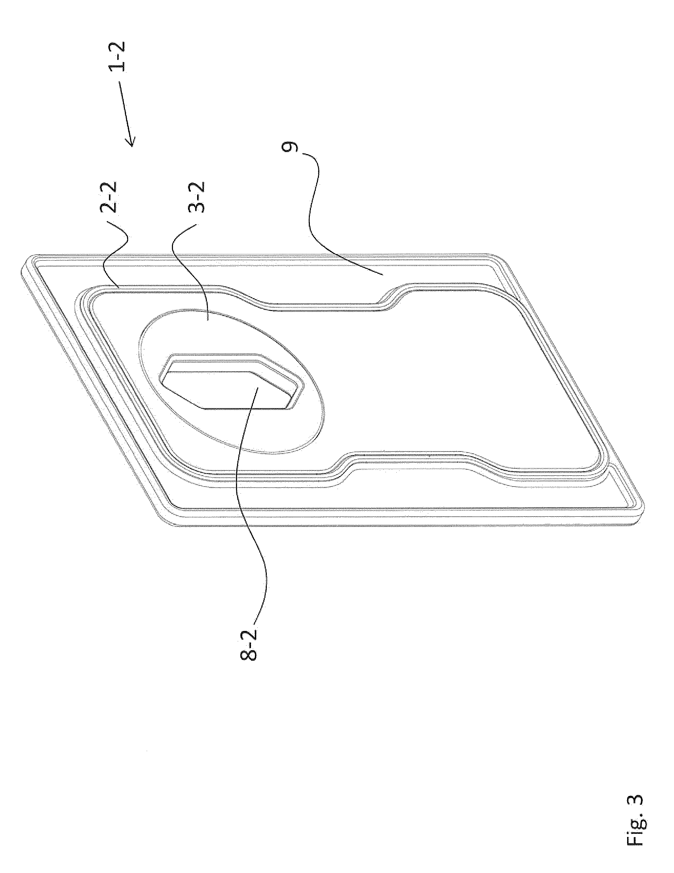

Im Gegensatz zur Figur 2 ist die Haltevorrichtung 1-2 der Figur 3 in dem ersten, nichtausgeklappten Zustand dargestellt.

Es ist zu erkennen, dass durch das Einsetzen des Befestigungselements 3-2 in die erste Haltestruktur 2-2 und das Einfügen der ersten Haltestruktur 2-2 in die zweite Haltestruktur 9 die Haltevorrichtung 1-2 eine ebene Form annimmt. Diese platzsparende Anordnung ermöglicht einen sehr komfortablen Transport der Haltevorrichtung 1-2 zum Beispiel in einer Aktentasche oder dergleichen.

In Figur 3 ist ferner zu erkennen, dass das Befestigungselement 3-2 im Vergleich zu Figuren 1 und 2 um 90° gedreht in der ersten Haltestruktur 2-2 angeordnet ist. Wie oben bereits erwähnt, bildet auf diese Art die zweite Haltestruktur 9 in dem zweiten, ausgeklappten Zustand eine Ablagefläche, wenn die entsprechende Steckdose vertikal angeordnete Kontakte aufweist.

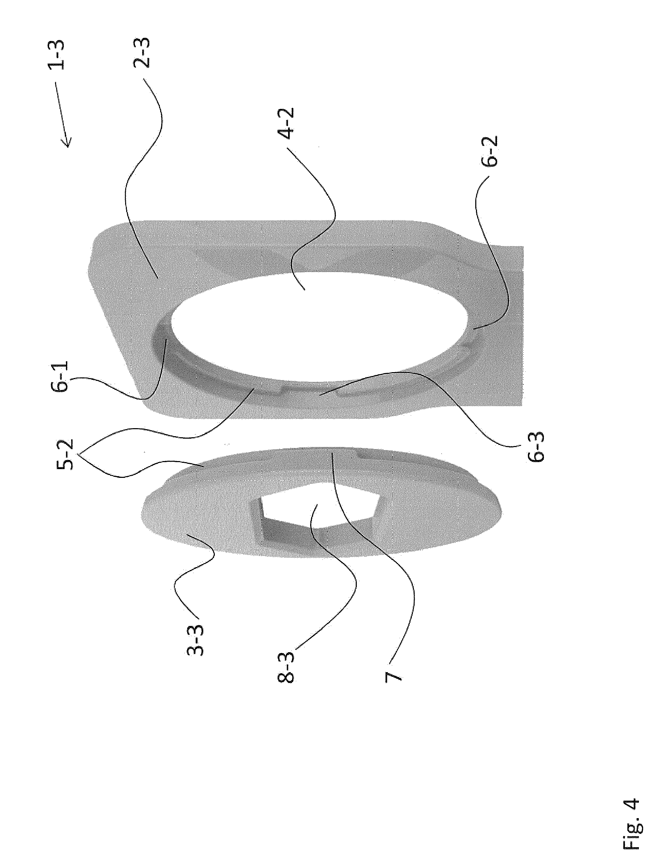

Die Haltevorrichtung 1-3 der Figur 4 basiert auf der Haltevorrichtung 1-1 der Figur 1 und weist ebenfalls eine erste Haltestruktur 2-3 mit einer ersten Ausnehmung 4-2 und ein Befestigungselement 3-3 mit einer zweiten Ausnehmung 8-3 in einem nicht-gekoppelten Zustand auf.

Im Gegensatz zur Figur 1 weist die Verschlusseinrichtung 5-2 der Figur 4 Ausnehmungen 6-1, 6-2, 6-3 und Erhebungen 7 auf. Die äußere Kontur des Befestigungselements 3-3 weist dabei vier Erhebungen 7 auf, von welchen aufgrund der perspektivischen Darstellung lediglich eine sichtbar ist. In der inneren Kontur der ersten Ausnehmung 4-2 sind vier dazu korrespondierende Ausnehmungen 6-1, 6-2, 6-3 vorgesehen, in welche die Ausnehmungen 7 eingreifen können. Durch eine solche Verzahnung kann das Befestigungselement 3-3 in einem eingesetzten Zustand nicht verdreht werden, da es von den in die Ausnehmungen 6-1 - 6-3 eingreifenden Erhebungen 7 gehalten wird.

In einer Ausgestaltung kann beispielsweise lediglich eine Erhebung 7 an dem Befestigungselement 3-3 vorgesehen sein, zu welcher lediglich zwei Ausnehmungen 6-1 - 6-2 in dem inneren Umfang der ersten Ausnehmung 4-2 vorgesehen sind.

Es wird abschließend noch einmal darauf hingewiesen, dass es sich bei den vorhergehend detailliert beschriebenen Haltevorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso ist nicht ausgeschlossen, dass als einzelne Einheiten dargestellte Elemente der vorliegenden Erfindung aus mehreren zusammenwirkenden Teil-Komponenten bestehen, die gegebenenfalls auch räumlich verteilt sein können.

### Bezugszeichenliste:

- 1-1; 1-2; 1-3: Haltevorrichtung
- 2-1; 2-2; 2-3: erste Haltestruktur
- 3-1; 3-2; 3-3: Befestigungselement
- 4-1; 4-2: erste Ausnehmung
- 5-1,5-2: Verschlusseinrichtung
- 6-1; 6-2; 6-3: Ausnehmungen
- 7: Erhebung
- 8-1; 8-2; 8-3: zweite Ausnehmung
- 9: zweiten Haltestruktur
- 10: dritte Ausnehmung
- 11: Gelenkvorrichtung
- 12: rutschhemmende Schicht
- 13: Winkel
- 14: Abstand
- 20,21: Stufen

## Patentansprüche

1. Haltevorrichtung (1-1; 1-2; 1-3) zur Befestigung in einer Steckdose durch einen Stecker, mit
- einer flächig ausgebildeten ersten Haltestruktur (2-1; 2-2; 2-3); und
- einem Befestigungselement (3-1; 3-2; 3-3), welches ausgebildet ist, die Haltevorrichtung (1-1; 1-2; 1-3) an der Steckdose zu befestigen, und welches mit der ersten Haltestruktur (2-1; 2-2; 2-3) in einer ersten Position und einer zweiten Position lösbar koppelbar ist und welches ausgebildet ist, den Stecker aufzunehmen;
wobei das Befestigungselement (3-1; 3-2; 3-3) in der ersten Position gegenüber der zweiten Position um einen im Wesentlichen rechten Winkel verdreht mit der ersten Haltestruktur (2-1; 2-2; 2-3) gekoppelt ist.

2. Haltevorrichtung (1-1; 1-2; 1-3) nach Anspruch 1, wobei die erste Haltestruktur (2-1; 2-2; 2-3) eine erste Ausnehmung (4-1; 4-2) mit einer inneren Kontur in der Form einer äußeren Kontur des Befestigungselements (3-1; 3-2; 3-3) aufweist und das Befestigungselement (3-1; 3-2; 3-3) mittels einer Passung, insbesondere einer Übergangspassung oder einer Presspassung, mit der ersten Haltestruktur (2-1; 2-2; 2-3) koppelbar ist.

3. Haltevorrichtung (1-1; 1-2; 1-3) nach einem der Ansprüche 1 und 2, wobei das Befestigungselement (3-1; 3-2; 3-3) eine im Wesentlichen runde oder quadratische Form aufweist.

4. Haltevorrichtung (1-1; 1-2; 1-3) nach einem der Ansprüche 1 bis 3, mit einer Verschlusseinrichtung (5-1, 5-2), welche ausgebildet ist, das Befestigungselement (3-1; 3-2; 3-3) mit der ersten Haltestruktur (2-1; 2-2; 2-3) zu koppeln.

5. Haltevorrichtung (1-1; 1-2; 1-3) nach Anspruch 4, wobei die Verschlusseinrichtung (5-1, 5-2) Ausnehmungen in der ersten Haltestruktur (2-1; 2-2; 2-3) und hierzu korrespondierende Erhebungen in dem Befestigungselement (3-1; 3-2; 3-3) aufweist; und/oder
wobei die Verschlusseinrichtung (5-1, 5-2) Ausnehmungen in dem Befestigungselement (3-1; 3-2; 3-3) und hierzu korrespondierende Erhebungen in der ersten Haltestruktur (2-1; 2-2; 2-3) aufweist; und/oder
wobei die Verschlusseinrichtung (5-1, 5-2) eine Stufe (20) in dem Befestigungselement (3-1; 3-2; 3-3) und eine hierzu korrespondierende Stufe (21) in der ersten Haltestruktur (2-1; 2-2; 2-3) aufweist; und/oder
wobei die Verschlusseinrichtung (5-1, 5-2) ein Gewinde in dem Befestigungselement (3-1; 3-2; 3-3) und ein hierzu korrespondierendes Gegengewinde in der ersten Haltestruktur (2-1; 2-2; 2-3) aufweist.

6. Haltevorrichtung (1-1; 1-2; 1-3) nach einem der Ansprüche 1 bis 5, wobei das Befestigungselement (3-1; 3-2; 3-3) eine zweite Ausnehmung (8-1; 8-2; 8-3) in Form eines CEE7/16 Steckers oder eines Steckers aufweist, welcher in eingestecktem Zustand nicht in einer entsprechenden Steckdose versinkt.

7. Haltevorrichtung (1-1; 1-2; 1-3), insbesondere nach einem der Ansprüche 1 bis 6, zur Befestigung in einer Steckdose durch einen Stecker mit
- einer flächig ausgebildeten ersten Haltestruktur (2-1; 2-2; 2-3);
- einem Befestigungselement (3-1; 3-2; 3-3), welches ausgebildet ist, die Haltevorrichtung (1-1; 1-2; 1-3) an der Steckdose zu befestigen;
- einer flächig ausgebildeten zweiten Haltestruktur (9); und
- einer (11), welche die erste Haltestruktur (2-1; 2-2; 2-3) und die zweite Haltestruktur (9) gelenkig miteinander koppelt;
wobei die erste Haltestruktur (2-1; 2-2) oder die zweite Haltestruktur eine dritte Ausnehmung (10) aufweisen, so dass in einem ersten, nicht-ausgeklappten Zustand die erste Haltestruktur (2-1; 2-2; 2-3) und die zweite Haltestruktur (9) in einer Ebene angeordnet sind
und dabei die erste Haltestruktur (2-1; 2-2; 2-3) in der dritten Ausnehmung (10) der zweiten Haltestruktur (9) angeordnet oder die zweite Haltestruktur in der dritten Ausnehmung der ersten Haltestruktur angeordnet ist; und
wobei die erste Haltestruktur (2-1; 2-2; 2-3) und die zweite Haltestruktur (9) in einem zweiten, ausgeklappten Zustand einen vorgegebenen Winkel zueinander aufweisen.

8. Haltevorrichtung (1-1; 1-2; 1-3) nach Anspruch 7, wobei
die dritte Ausnehmung (10) in der zweiten Haltestruktur (9) eine Innenkontur passend zu einer Außenkontur der ersten Haltestruktur (2-1; 2-2; 2-3)
oder
die dritte Ausnehmung in der ersten Haltestruktur eine Innenkontur passend zu einer Außenkontur der zweiten Haltestruktur
aufweist.

9. Haltevorrichtung (1-1; 1-2; 1-3) nach Anspruch 7 oder 8, wobei die Gelenkvorrichtung ausgebildet ist, den ersten Winkel (13) auf einen Winkel von 70° bis 110°, insbesondere von 80° bis 100° und insbesondere von 90° zu beschränken.

10. Haltevorrichtung (1-1; 1-2; 1-3) nach einem der Ansprüche 7 bis 9, wobei die zweite Haltestruktur (9) mindestens eine rutschhemmende Schicht (12) aufweist.

11. Verwendung einer Haltevorrichtung (1-1; 1-2; 1-3) nach einem der vorstehenden Ansprüche beim Aufladen eines elektronischen Geräts, insbesondere eines Mobilfunkgeräts, wobei das elektronische Gerät auf der zweiten Haltestruktur (9) abgelegt wird und ein Stecker eines Ladegeräts des elektronischen Geräts durch eine zweite Ausnehmung (8-1; 8-2; 8-3) des Befestigungselements (3-1; 3-2; 3-3) in eine Steckdose eingesteckt wird.
